Europäisches Patentamt

European Patent Office

Office européen des brevets

(19)

(11) Numéro de publication: **0 130 900**

**B1**

(12) **FASCICULE DE BREVET EUROPEEN**

(45) Date de publication du fascicule du brevet: **18.05.88**

(51) Int. Cl.⁴: **G 11 B 23/00**, G 11 B 7/28

(21) Numéro de dépôt: **84401333.4**

(22) Date de dépôt: **26.06.84**

(54) **Procédé de fabrication de disques optiques par pressage et disque obtenu par un tel procédé.**

(30) Priorité: **04.07.83 FR 8311071**

(43) Date de publication de la demande:
**09.01.85 Bulletin 85/02**

(45) Mention de la délivrance du brevet:
**18.05.88 Bulletin 88/20**

(84) Etats contractants désignés:
**DE GB NL**

(56) Documents cités:
**EP-A-0 032 452**
**DE-B-2 658 527**
**FR-A-1 052 259**
**FR-A-2 209 968**
**GB-A-2 055 677**

(73) Titulaire: **THOMSON-CSF**
**173, Boulevard Haussmann**
**F-75379 Paris Cédex 08 (FR)**

(73) Titulaire: **CENTRE MONDIAL INFORMATIQUE ET RESSOURCE HUMAINE**
**22 Avenue Matignon**
**F-75008 Paris (FR)**

(72) Inventeur: **Lacotte, Jean-Pierre**
**THOMSON-CSF SCPI 173, bld Haussmann**
**F-75379 Paris Cedex 08 (FR)**
Inventeur: **Kretschmer, Sylvain**
**THOMSON-CSF SCPI 173, bld Haussmann**
**F-75379 Paris Cedex 08 (FR)**
Inventeur: **Oprandi, Pierre**
**THOMSON-CSF SCPI 173, bld Haussmann**
**F-75379 Paris Cedex 08 (FR)**
Inventeur: **Broussaud, Georges**
**THOMSON-CSF SCPI 173, bld Haussmann**
**F-75379 Paris Cedex 08 (FR)**

(74) Mandataire: **Turlèque, Clotilde et al**
**THOMSON-CSF SCPI 19, avenue de Messine**
**F-75008 Paris (FR)**

Courier Press, Leamington Spa, England.

EP 0 130 900 B1

**Description**

La présente invention se rapporte aux disques optiques, d'est à dire aux disques sur lesquels sont enregistrées des données d'informations, ces données étant lisibles à l'aide d'un faisceau de rayons focalisés. Ces données peuvent représenter des informations vidéo c'est à dire des signaux d'images, de son et de données ou des informations purement numériques dans les applications destinées à l'informatique ou à la numérisation de signaux analogiques. L'invention concerne plus particulièrement un procédé de fabrication d'un tel disque.

Les disques lisibles optiquement sont généralement tels que l'information est enregistrée sur une piste sous forme de micro-reliefs dont la largeur est de l'ordre du micromètre et dont la longueur est fixe ou variable selon le procédé d'enregistrement. Cette piste peut avoir la forme de cercles concentriques ou être une piste en spirale, le pas entre les sillons suivant la direction radiale étant compris entre 1,5 et 2 µm. De tels disques permettent d'enregistrer une grande quantité d'information lisible optiquement. La lecture est obtenue par diffraction d'un rayonnement concentré sur le plan contenant l'information lorsque le disque est en rotation, le dispositif de lecture comportant des dispositifs d'asservissement radial et vertical permettant de maintenir le point de focalisation du faisceau de lecture sur la piste. La lecture peut être effectuée par transmission ou par réflexion.

Le disque peut comporter une ou deux faces gravées.

Si l'enregistrement original peut être obtenu directement par un procédé mettant en oeuvre des moyens de gravure comprenant également une source de rayons focalisés, il n'en est pas de même en ce qui concerne la duplication de cet enregistrement.

En effet, si l'on désire un nombre de copies conséquent de cet enregistrement, il est alors nécessaire d'avoir recours à des procédés basés, sur la duplication à l'aide d'une (disque monoface) ou deux matrices (disque biface) reproduisant l'enregistrement original.

De nombreuses méthodes ont été proposées dans l'art connu.

On distingue généralement deux types de disques, du moins en ce qui concerne l'épaisseur: les disques dits "épais", c'est à dire typiquement d'épaisseur supérieure à environ 300 micromètres, et par opposition, les disques dits "minces". Bien que cette distinction soit essentiellement conventionnelle, elle correspond, vus les techniques et matériaux mis en oeuvres, à des ordres de grandeurs différents des difficultés technologiques rencontrées pendant le processus de fabrication.

En ce qui concerne les disques "épais", il existe deux méthodes thermiques principales:
— une méthode par compression qui consiste à placer une galette de matériau thermoformable préchauffé entre deux matrices dont au moins une porte une empreinte à dupliquer, à chauffer et à presser jusqu'à ce que le matériau ait flué et ait pris la totalité de l'empreinte; l'épaisseur du disque obtenu est déterminée par un compromis entre la pression exercée et la fluidité du matériau thermoformable;
— une méthode par injection qui consiste à forcer avec une pression très élevée une quantité de pate d'un matériau thermoformable à remplir le vide existant entre deux matrices; l'épaisseur du disque obtenu est déterminée par le compromis entre la pression exercée et la fluidité du matériau thermoformable.

En ce qui concerne les disques "minces", aux deux méthodes citées précedémment, on peut en ajouter une troisième généralement appelée estampage décrite par exemple dans la demande de brevet FR 2 209 968. Cette méthode consiste à placer entre les deux matrices portant l'information, une feuille d'un matériau thermoformable. Un cycle température-pression permet de ramolir la surface pour que la prise d'empreinte puisse s'effectuer. L'épaisseur finale du disque est déterminée par l'épaisseur de la feuille.

Enfin, pour tous les types de disques, en plus des méthodes thermiques citées précédemment, depuis quelques années est apparue une méthode différente qui consiste à photo-polymériser, en présence d'un rayonnement dans la gamme des ultra-violets, un matériau photosensible déposé sur un substrat par enduction et sur lequel la matrice vient copier l'information alors que le matériau photopolymère est encore liquide. L'épaisseur obtenue est en général très légèrement supérieur à l'épaisseur du substrat.

Cependant l'expérience montre que le problème le plus difficile à résoudre pour obtenir un disque de bonne qualité est certainement celui de la planéité du disque.

Le type de défaut de planéité intervient naturellement dans la qualité finale d'un disque. Il est relativement aisé de rattraper à l'aide des servomécanismes, dont sont pourvus les appareils de lecture, un défaut qui se présente sous la forme d'une seule ondulation par tour ou un voile, même de grande amplitude. En effet dans ce cas, le défaut est associé à une fréquence très basse pour laquelle le gain servomécanismes est à son maximum.

Par contre, lorsque le nombre des défauts, même d'amplitudes relativement faibles, est fort et leur répartition aléatoire, le gain des servomécanismes décroit du fait de leurs bandes passantes limitées et ces défauts ne peuvent être rattrapés. Il est donc nécessaire d'obtenir un état de surface de qualité suffisante pour s'affranchir de ce phénomène.

Les méthodes par compression ou par injection qui nécessitent des presses de grandes puissances introduisent souvent de très fortes contraintes dans les matériaux et actuellement le meilleur compromis entre toutes les spécifications et en particulier celles liées aux paramètres optiques, conduit à utiliser du polymétachrylate de methyle ("PMMA").

La méthode par photopolymérisation qui est certainement moins contraignante, et pour le matériau du disque et pour les matrices, nécessite tout de même l'utilisation d'un substrat de bonne qualité. Or ce dernier est souvent obtenu par injection ou compression, et donc les mêmes difficultés se présentent au moment de sa fabrication.

Par opposition, la méthode d'estampage est intéressante d'abord parce que l'on peut faire prépressages avec des matrices sans information pour améliorer la planéité mais aussi parce qu'il n'y pratiquement pas de déplacement de matière sous la matrice. Cette méthode donne de bons résultats pour des films minces, typiquement inférieurs à 300 micromètres comme il a été indiqué. Dès que l'on veut passer à des épaisseurs supérieures, il s'agit de "planches" et non plus de films. Les "planches" ont en général une planéité assez médiocre et cette méthode est inapplicable aux disques dits "épais".

L'invention se place dans le cadre de la fabrication de disques de ce dernier type et vise à pallier les difficultés qui viennent d'être énoncées.

L'invention a pour objet un procédé de fabrication de disques optiques gravés sur au moins une face au moyen d'une presse à compression comprenant une paire de machoires, mobiles l'une par rapport à l'autre, supportant chacune, respectivement une première matrice gravée et une seconde matrice, contre-matrice ou matrice gravée, consistant à disposer, entre les matrices, un empilement d'au moins deux feuilles en matériau thermoformable et à soumettre l'empilement à un cycle pression-température, la dite pression étant exercée par le moyen du rapprochement des machoires de la presse comprimant l'empilement de feuilles en matériau thermoformable; le cycle température, comprenant l'élévation de la température à partir d'une température ambiante pour dépasser le point de ramollissement du matériau et le retour à la température ambiante; de manière à obtenir, à l'issue de ces étapes, le collage des feuilles constituant ledit empilement les unes sur les autres et la duplication de la gravure de chaque matrice gravée sur l'une des faces principales de l'empilement, caractérisé en ce que les feuilles sont constituées d'un même matériau thermoformable, le disque composé ayant une épaisseur déterminée supérieure à environs 300 μm.

L'invention sera mieux comprise et d'autres caractéristiques et avantages apparaitront à l'aide de la description qui suit en référence aux figures annexées et parmi lesquelles:

— la figure 1 illustre une des étapes du procédé de l'invention;

— la figure 2 illustre schématiquement une presse;

— la figure 3 est un diagramme représentant un cycle typique échauffement-refroidissement de matériau thermoformable.

Un aspect fondamental du procédé selon l'invention est d'associer plusieurs feuilles d'un film en matériau thermoformable, empilées les unes sur les autres et de réaliser le transfert de l'information par la méthode d'estampage. On peur obtenir ainsi des disques épais, dont l'épaisseur est déterminée par la somme des épaisseurs des films empilés, présentant une excellente planéité et autorisant, simultanément, l'utilisation de matériau bon marché tel que le polychlorure de vinyle (PVC).

En outre, comme il le sera décrit de façon plus détaillée dans ce qui suit, le procédé de l'invention reste compatible avec l'utilisation d'une presse conventionnelle.

Les étapes du procédé selon l'invention vont être maintenant décrites de façon plus détaillée.

Il comprend une phase préliminaire de création d'au moins une matrice comportant en "négatif", sur l'une de ses faces principales, une gravure représentant l'information à dupliquer. S'il s'agit d'un disque double face, il doit être créé naturellement deux matrices associées aux deux faces du disque. Ces matrices sont rendues solidaires des machoires d'une presse.

Cette phase est entièrement commune avec l'art connu et ne nécessite pas de plus amples développement.

Les étapes propres au procédé de l'invention commencent par l'insertion entre les machoires de la presse munies de leurs matrices respectives, d'un empilement de feuilles en matériaux thermoformables.

Pour un processus en continu, cet empilement de feuilles peut être constitué par un empilement de bandes de largeur au moins égale au diamètre des disques réalisé, empilement défilant, pas à pas, entre les machoires de la presse, pour qu'à chaque cycle une copie de la gravure des matrices soit réalisée.

Selon une autre variante, chaque feuille peut être constituée par une préforme, découpée grossièrement à la dimension du disque à réaliser et qui peut être pré-percée d'un orifice central qui servira au centrage lors d'une étape finale de découpe du disque à ses dimensions définitives.

Le nombre de feuilles de l'empilement est naturellement déterminé, comme il a été indiqué, par l'épaisseur finale du disque à obtenir. De façon préférentielle, toutes les feuilles sont du même matériau.

Pour fixer les idées, un disque optique a typiquement 1,2 millimètre d'épaisseur et les films sont en polychlorure de vinyle.

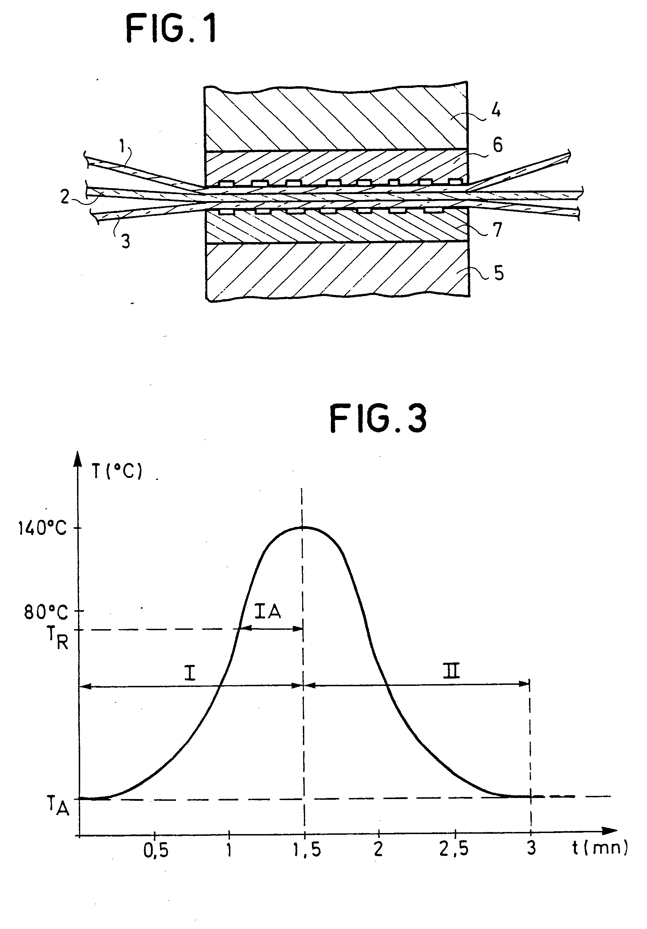

Ensuite, comme représenté schématiquement à la figure 1, de façon analogue à l'art connu, l'empilement de feuilles ou de films est soumis à un cycle "température-pression". Cependant, cette étape présente la spécificité d'obtenir simultanément le transfert de la gravure sur l'une des faces principales extrêmes de l'empilement de films et le collage des différents films de l'empilement les uns aux autres. Cette dernière action est due à la qualité thermoformable du matériau utilisé.

Sur la figure 1, a été représenté un empilement de trois feuilles sous forme de bandes continues 1, 2 et 3 qui ont été introduites entre deux machoires 4 et 5, d'une presse, supportant chacune une matrice, 6 et 7, à dupliquer. S'il s'agit d'un disque monoface, une seule matrice est gravée et l'autre matrice, ou contre-matrice est lisse.

A titre d'exemple, toujours pour fixer les idées, la température à laquelle est soumis l'empilement est de l'ordre de 150°C. Elle ne doit pas être trop élevée pour éviter une dégradation des qualités intrinsèques du matériau utilisé. La pression, appliquée perpendiculairement aux plans formées par les films de matériaux thermoformables, peut être choisie dans la gamme comprise entre 30 et 40 Kg.cm$^{-2}$, ce pendant un intervalle de temps typique compris entre 20 et 60 s. L'éffauchement est obtenu par l'utilisation de moyens de chauffage des machoires.

Enfin, l'ensemble est ramené à la température ambiante, étape de refroidissement permettant de figer la gravure transférée, de façon analogue à l'art connu, et de rendre définitif le collage des différents films de l'empilement.

Le retour à la température ambiante s'effectue dans un intervalle de temps dépendant de la capacité de refroidissement des machoires.

Si la découpe et le perçage d'un trou central du disque ne sont pas réalisées simultanément à l'étape de gravure, le procédé comprend des étapes supplémentaires pour réaliser ces opérations, de façon identique à ce qui est réalisé dans l'art connu.

Dans la majorité des cas, à la suite de ces étapes du procédé de l'invention le produit obtenu, c'est-à-dire un disque optique d'épaisseur prédéterminé présente une planéité suffisante pour la plupart des applications envisagées, c'est à dire une planéité de l'ordre du micromètre pour de courtes périodes spatiales (inférieures à 10 cm).

Cependant, il est encore possible d'améliorer la planéité suivant deux variantes du procédé, variantes comprenant des étapes supplémentaires.

Selon une première variante, il est procédé à une étape de prépressage individuel des feuilles de l'empilement. Pour ce faire, les feuilles sont soumises à une cycle température-pression analogue à celui qui vient d'être rappelé, mais pendant lequel chaque feuille est disposée entre des machoires lisse d'une presse ou, plus généralement, entre des matrices lisses ou organes analogues.

Selon une seconde variante, l'empilement complet de feuilles subit globalement un tel traitement. Dans ce cas, on réalise pendant ces étapes supplémentaires également le collage des feuilles les unes sur les autres. On soumet ensuite l'empilement ainsi realisé à un nouveau cycle température-pression, mais essentiellement pour obtenir la duplication d'informations.

Comme il a été rappelé, et cela constitue un avantage supplémentaire du procédé de l'invention, celui-ci reste compatible avec l'utilisation des presses mises en oeuvre dans l'Art Connu.

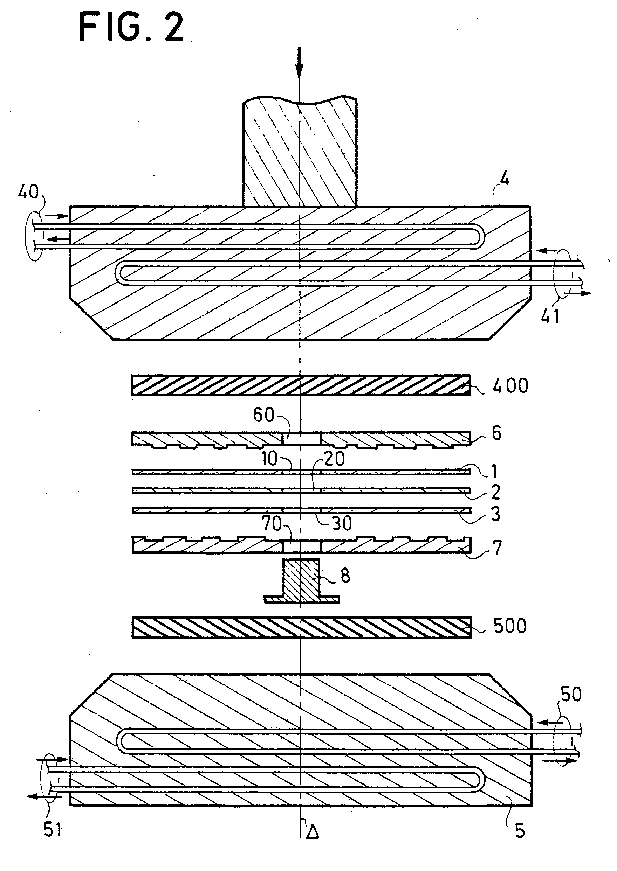

Une telle presse va maintenant être décrite brièvement pour illustrer plus complètement l'invention par référence à la figure 2.

Sur cette figure n'ont été représentées que les pièces principales nécessaires à la fabrication de disques selon le procédé de l'invention.

La presse comprend tout d'abord une machoire supérieure 4 mobile et une machoire inférieur 5 le plus souvent solidaire d'un bâti fixe non représenté. Sous l'action de forces de pression, la machoire supérieur se rapproche de la machoire inférieure suivant une direction parallèle à un axe orthogonal aux faces principales en vis à vis des deux machoires. Ces faces sont planes. Entre les deux machoires, 4 et 5, comme précédemment rappelé, on dispose, d'une part, un jeu de matrices à dupliquer 6 et 7 pourvues d'orifices de centrage 60 et 70, d'autre part, l'empilement de feuilles en matériau thermoformable.

Dans l'exemple illustré, ces feuilles sont constituées de trois préformes de disques 1 à 3, pourvues d'orifices de centrage 10 à 30, prédécoupés.

Dans la réalité, les matrices ne sont pas généralement en contact direct avec les machoires mais par l'intermédiaire de feuilles 400 et 500 en matériau élastique formant coussin, répartissant de façon plus régulière les forces de pression exercées sur les matrices 6 et 7 et l'empilement de feuilles thermodéformables 1 à 3.

Enfin, il est également prévu une pièce de centrage 8 sur laquelle sont enfilées les matrices 6 et 7 et les préformes 1 à 3.

Pour obtenir une élévation de température des machoires, communiquée aux feuilles 1 à 3, plusieurs moyens on été proposés. À titre d'exemple, ces moyens peuvent être contitués par des résistances électriques chauffantes.

Cependant, il est difficile vue l'inertie thermique généralement présentée par ce machoires, d'obtenir une mise en température rapide.

Dans la réalisation de presse illustrée par la figure 2, il est préféré un échauffement par circulation de vapeur sèche circulant dans un serpentin au sein de chaque machoire, respectivement les serpentins 40 et 50.

Il peut être également envisagé un chauffage par ondes électromagnétiques hautes fréquences occasionnant des pertes diélectriques.

Le refroidissement, c'est à dire le retour à la température ambiante peut être obtenu par la circulation d'eau ou d'un fluide également dans des serpentins disposés au sein des machoires, 41 et 51 respectivement sur la figure 2.

La figure 3 est un diagramme illustrant un cycle typique chauffage-refroidissement obtenu avec une telle presse. On fait circuler la vapeur sèche dans les serpentins 40 et 50. La mise en température s'effectue pendant un intervalle de temps 1 der 1,5 mm environ, à l'issu duquel on obtient une température moyenne de 140°C.

La pression sur l'empilement de feuilles est appliquée dès le début du cycle.

A partir d'une température un peu inférieure à 80°C, le point de ramollissement du matériau des feuilles de l'empilement étant atteint, du polychlorure de vinyle dans l'exemple illustré, la duplication de l'information, c'est à dire la prise d'empreinte à partir du matériau et le collage s'effectuent: intervalle de temps 1A.

Ensuite, on stoppe l'arrivée de vapeur sèche et on fait circuler dans les serpentins 41 et 51 le liquide de refroidissement. Le temps nécessaire au retour à la température ambiante est égal ou de l'ordre de grandeur de celui nécessaire à la mise en température 1,5 mn dans l'exemple illustré.

**Revendications**

1. Procédé de fabrication de disques optiques gravés sur au moins une face au moyen d'une presse à compression comprenant une paire de machoires (4, 5), mobiles l'une par rapport à l'autre, supportant chacune, respectivement une première matrice gravée (6) et une seconde matrice (7), contre-matrice ou matrice gravée, consistant à disposer, entre les matrices, (6, 7) un empilement d'au moins deux feuilles (1, 2, 3) en matériau thermoformable et à soumettre l'empilement à une cycle pression-température, la dite pression étant exercée par le moyen du rapprochement des machoires (4, 5) de la presse comprimant l'empilement de feuilles en matériau thermoformable; le cycle température, comprenant l'élévation de la température à partir d'une température ambiante $(T_A)$ pour dépasser le point de ramollisement $(T_R)$ du matériau et le retour à la température ambiante $(T_A)$; de manière à obtenir, à l'issue de ces étapes, le collage des feuilles (1, 2, 3) constituant ledit empilement les unes sur les autres et la duplication de la gravure de chaque matrice gravée (6, 7) sur l'une des faces principales de l'empilement, caractérisé en ce que les feuilles sont constituées d'un même matériau thermoformable, le disque composé ayant une épaisseur déterminée supérieure à environ 300 µm.

2. Procédé selon la revendication 1, caractérisé en ce que ledit collage et ladite duplication de gravure sont obtenus de façon simultanée lors de l'élévation de la température au-dessus du pont de ramollissement $(T_R)$ du matériau thermoformable.

3. Procédé selon l'une quelconque des revendications 1 ou 2, caractérisé en ce qu'il comprend une étape supplémentaire initiale pendant laquelle chaque feuille (1, 2, 3) de l'empilement est soumise à un cycle pression-température entre deux matrices lisses pendant lequel la température est élevée à partir de la température ambiante jusqu'à une température supérieure au point de ramollissement $(T_R)$ du matériau thermoformable la composant et ramenée à la température ambiante $(T_A)$ de manière à en améliorer la planéité.

4. Procédé selon la revendication 1 caractérisé en ce qu'il comprend une étape supplémentaire initiale pendant laquelle un empilement d'au moins deux feuilles (1, 2, 3) de matériau thermoformable est soumis à un cycle pression-température entre deux matrices lisses pendant lequel la température est élevée à partir de la température ambiante $(T_A)$ jusqu'à une température supérieure au point de ramollissement $(T_R)$ du matériau thermoformable et ramenée à la température ambiante $(T_A)$, le collage des feuilles (1, 2, 3) de l'empilement étant réalisé à l'issue de cette étape.

5. Procédé selon l'une quelconque des revendications 1 à 4, caractérisé en ce que chaque feuille (1, 2, 3) de matériau thermoformable a une épaisseur de 150 micromètres.

6. Procédé selon l'une quelconque des revendications 1 à 5 caractérisé en ce que chaque feuille (1, 2, 3) de matériau thermoformable est constituée par une préforme de disque de diamètre supérieur au disque optique à fabriquer et comportant un orifice (10, 20, 30) de centrage prédécoupé de manière à aligner les préformes les unes par rapport aux autres pour constituer ledit empilement.

7. Procédé selon l'une quelconque des revendications 1 à 6, caractérisé en ce que le matériau thermoformable est du polychlorure de vinyle.

**Patentansprüche**

1. Verfahren zur Herstellung von auf mindestens einer Seite gravierten optischen Scheiben mithilfe einer Kompressionspresse, die ein Paar von gegeneinander bewegbaren Backen (4, 5) besitzen, die je eine Matrize tragen, nämlich eine erste gravierte Matrize (6) bzw. eine zweite Matrize (7), die als Gegenmatrize oder als gravierte Matrize ausgebildet ist, wobei das Verfahren darin besteht, zwischen den Matrizen (6, 7) einen Stapel von mindestens zwei Folien (1, 2, 3) aus einem thermoplastischen Material anzuordnen und den Stapel einem Druck- und Temperaturzyklus zu unterwerfen, wobei der Druck von dem Mittel zum Einanderannähern der Backen (4, 5) der Presse ausgeübt wird, das den Folienstapel aus thermoplastischem Material komprimiert, und wobei in dem Temperaturzyklus die Temperatur von einer Umgebungstemperatur $(T_A)$ über den Erweichungspunkt $(T_R)$ des Materials hinaus erhöht und dann zur Umgebungstemperatur $(T_A)$ wieder abgesenkt wird, so daß am Ende dieser Verfahrensschritte die den Stapel bildenden Folien (1, 2, 3) aufeinander kleben und die Gravur jeder gravierten Matrix (6, 7) auf eine der Stirnseiten des Stapels kopiert ist, dadurch gekennzeichnet, daß die Folien aus einem gleichen thermoplastischen Material bestehen und die zusammengesetzte Scheibe eine bestimmte Dicke größer als ungefähr 300 µm besitzt.

2. Verfahren nach Anspruch 1, dadurch gekennzeichnet, daß das Kleben der Folien und die Kopie der Gravur gleichzeitig während des Erhöhens der Temperatur über den Erweichungspunkt $(T_R)$ des thermoplastischen Materials hinaus erreicht werden.

3. Verfahren nach einem beliebigen der Ansprüche 1 oder 2, dadurch gekennzeichnet, daß es einen zusätzlichen einleitenden Verfahrensschritt aufweist, während dem jede Folie (1, 2, 3) des Stapels einem Druck-Temperaturzyklus zwischen zwei glatten Matrizen unterworfen wird, wobei die Temperatur ausgehend von der Umgebungstemperatur bis auf eine Temperatur oberhalb des Erweichungspunkts ($T_R$) des thermoplastischen Materials, aus dem die Folie besteht, erhöht wird und dann wieder auf Umgebungstemperatur ($T_A$) abgesenkt wird, so daß die Folien ebener werden.

4. Verfahren nach Anspruch 1, dadurch gekennzeichnet, daß es einen zusätzlichen einleitenden Verfahrensschritt aufweist, während dem ein Stapel von mindestens zwei Folien (1, 2, 3) aus wärmeveformbarem Material einem Druck-Temperaturzyklus zwischen zwei glatten Matrizen unterworfen wird, wobei die Temperatur von der Umgebungstemperatur ($T_A$) bis auf eine Temperatur oberhalb des Erweichungspunkts ($T_R$) des thermoplastischen Materials erhöht und dann auf die Umgebungstemperatur ($T_A$) wieder abgesenkt wird und wobei das Verkleben der Folien (1, 2, 3) des Stapels am Ende diese Verfahrensschritts erfolgt.

5. Verfahren nach einem beliebigen der Ansprüche 1 bis 4, dadurch gekennzeichnet, daß jede Folie (1, 2, 3) aus thermoplastischem Material eine Dicke von 150 µm besitzt.

6. Verfahren nach einem beliebigen der Ansprüche 1 bis 5, dadurch gekennzeichnet, daß jede Folie (1, 2, 3) aus thermoplastischem Material von einem scheibenförmigen Rohling eines Durchmesser größer dem der herzustellenden optischen Scheibe gebildet wird, der eine vorher ausgestanzte Zentrieröffnung (10, 20, 30) besitzt, so daß die Rohlinge zueinander zur Bildung des Stapels ausgerichtet werden.

7. Verfahren nach einem beliebigen der Ansprüche 1 bis 6, dadurch gekennzeichnet, daß das thermoplastische Material PVC ist.

## Claims

1. A method for manufacturing optical disks which are engraved on at least one surface by means of a compression press comprising a pair of yaws (4, 5) which are movable with respect to each other and support dies i.e. a first engraved die (6) and a second die (7) which is a counter-die or an engraved die, the method consisting in disposing a stack of at least two films (1, 2, 3) made of a thermoplastic material between the dies (6, 7) and in submitting the stack to a pressure-temperature cycle, said pressure being exerted by the means for approaching the dies (4, 5) of the press which compress the stack of films made of thermoplastic material, the temperature cycle comprising the raising of the temperature from the ambient temperature ($T_A$) to above the softening point ($T_R$) of the material and back again to the ambient temperature ($T_A$) resulting at the issue of these steps in the adhering of the films (1, 2, 3) constituting said stack one on the other and in the duplication of the engraving of each engraved dies (6, 7) on one of the main surfaces of the stack, characterized in that the films are constituted of the same thermoplastic material, the composed disk having a predetermined thickness greater than about 300 µm.

2. A method according to claim 1, characterized in that said adhering and said duplication of the engraving are achieved simultaneously during the raising of the temperature above the softening point ($T_R$) of the thermoplastic material.

3. A method according to any one of claims 1 or 2, characterized in that it comprises an additional initial step during which each film (1, 2, 3) of the stack is submitted to a pressure-temperature cycle between two smooth dies during which the temperature is raised from ambient temperature up to a temperature above the smoothing point ($T_R$) of the thermoplastic material constituting the film, and back again to ambient temperature ($T_A$) such that the films are rendered evener.

4. A method according to claim 1, characterized in that it comprises an additional initial step during which a stack of at least two films (1, 2, 3) of thermoplastic material is submitted to a pressure-temperature cycle between two smooth dies during which the temperature is raised from ambient temperature ($T_A$) up to a temperature above the smoothing point ($T_R$) of the thermoplastic material and back again to ambient temperature ($T_A$), the adhering of the films (1, 2, 3) of the stack being obtained at the issue of this step.

5. A method according to any one of claims 1 to 4, characterized in that each film (1, 2, 3) of thermoplastic material has a thickness of 150 µm.

6. A method according to any one of claims 1 to 5, characterized in that each film (1, 2, 3) of thermoplastic material is constituted by a disk preform of a diameter exceeding that of the optical disk to be fabricated, this preform comprising a precut centering hole (10, 20, 30) allowing to align the preforms one with respect to the others for constituting said stack.

7. A method according to any one of claims 1 to 6, characterized in that the thermoplastic material is PVC.

# FIG.1

# FIG.3

# FIG. 2